(19)

Europäisches
Patentamt

European
Patent Office

Office européen
des brevets

(11) **EP 3 705 239 B1**

(12) **EUROPEAN PATENT SPECIFICATION**

(45) Date of publication and mention
of the grant of the patent:
**10.01.2024 Bulletin 2024/02**

(21) Application number: **20159931.3**

(22) Date of filing: **27.02.2020**

(51) International Patent Classification (IPC):
***B25J 9/16*** *(2006.01)*

(52) Cooperative Patent Classification (CPC):
**B25J 9/1692**

(54) **CALIBRATION SYSTEM AND METHOD FOR ROBOTIC CELLS**

KALIBRIERUNGSSYSTEM UND -VERFAHREN FÜR ROBOTERZELLEN

SYSTÈME ET PROCÉDÉ D'ÉTALONNAGE POUR CELLULES ROBOTIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.03.2019 GB 201902813**

(43) Date of publication of application:
**09.09.2020 Bulletin 2020/37**

(73) Proprietor: **Arrival UK Limited
London W14 8TS (GB)**

(72) Inventors:
- **BUZYNIN, Nikolay
  London, W14 8TS (GB)**
- **ALIEV, Artem
  London, W14 8TS (GB)**
- **TIMERBAEV, Andrey
  London, W14 8TS (GB)**

(74) Representative: **Korenberg, Alexander Tal et al
Kilburn & Strode LLP
Lacon London
84 Theobalds Road
London WC1X 8NL (GB)**

(56) References cited:
**WO-A1-2019/028075**

- **TIAN X ET AL: "Quick 3D Modeling of Machining
  Environment by Means of On-machine Stereo
  Vision with Digital Decomposition", CIRP
  ANNALS, ELSEVIER BV, NL, CH, FR, vol. 56, no.
  1, 1 January 2007 (2007-01-01), pages 411-414,
  XP027151089, ISSN: 0007-8506 [retrieved on
  2007-01-01]**
- **Roger: "A Versatile Camera Calibration
  Techniaue for High-Accuracy 3D Machine Vision
  Metrology Using Off-the-shelf TV Cameras and
  Lenses", , 1 January 1987 (1987-01-01),
  XP055094621, Retrieved from the Internet:
  URL:http://ieeexplore.ieee.org/ielx5/56/23
  638/01087109.pdf?tp=&arnumber=1087109&isn
  u mber=23638 [retrieved on 2013-12-20]**

**Description**

Field Of Invention

The field of invention is the physical operations of a robotized manufacturing system.

Background

In robotic manufacturing systems, objects are grasped, manipulated, and processed by robots in robot cells. The static relations between the objects in the robot cell must be precisely calibrated before robotic operations can be properly performed. During manufacturing processing of objects, each robot process cell setup may change due to change in production or physical changes of the robot cell environment. Sometimes the calibration of the robotic cell scene might not be precise enough which can result in mismatches with simulated models of the robot kinematics, real robot position errors, and part processing errors. Thus, updating the robotic cell calibration is a very important step before performing robotic operations on the objects.

Object position errors are common in robotic systems. There are no absolutely identical robots, the movements of the robots cause the error accumulation, augmenting the difference to the real and prognosed positions. Wearing out the parts over time also changes the trajectories of operations. The task is to bring the coordinates of the robots' orientation to the selected Cartesian coordinates origins. 3D simulation environments have been developed where entire robotic cells can be designed, programmed and tested. However, these 3D simulations are only models of the real robot cells. If there are deviations between the 3D simulation models and the real world positions then processing errors will occur. These geometric errors might be responsible for about 90% of the total robot cell positioning errors. In addition to the errors in object lengths and component offsets, the positioning errors can also be caused by non-perfect assembly with non-uniform object elements, which might be assumed to be matched and aligned by the robotic system. What is needed is an effective calibration system and method which reduces or prevents object processing errors.

"Quick 3D Modeling of Machining Environment by Means of On-machine Stereo Vision with Digital Decomposition" (by Tian et al.) describes a three dimensional vision-based modeling system, which can construct solid models of a machining environment including the workpiece setup with jigs and fixtures on the machine table.

WO 2019/028075 A1 describes an intelligent robotic system. The intelligent robotic system can include at least one multi-axis robotic arm, at least one gripper attached to the multi-axis robotic arm for picking up a component, a machine vision system comprising at least a three-dimensional (3D) surfacing-imaging module for detecting 3D pose information associated with the component, and a control module configured to control movements of the multi-axis robotic arm and the gripper based on the detected 3D pose of the component.

Summary of Invention

An invention is defined in the appended claims.

Overview of Disclosure

The present disclosure is directed towards a system and method for calibrating the positions of robots and objects in robot cells. The robot cell system can include cameras, robots, objects, object movement mechanisms (such as automatic guided vehicles and conveyor belts), and a robot controller which is coupled to the cameras and the robots. The robot controller includes software which generates a virtual robot cell which defines a virtual three dimensional space in which virtual cameras, virtual robots, and virtual objects are positioned and manipulated. The robot controller can take a plurality of virtual snapshots of the virtual robots in various poses and virtual objects from different virtual camera angles and positions. The robotic controller also takes a plurality of real snapshots of the robots and objects in the same poses as the virtual robot cell in the same virtual camera angles and positions.

The robot controller can compare the virtual snapshots to the matching real snapshots and differences between these snapshots can be detected. The robot controller can then determine the virtual snapshot that most closely matches the corresponding real snapshot. The location and orientation differences between the closest matching virtual snapshot and real snapshot can be used to adjust the calibration of the virtual robot cell. More specifically, the robot controller can make adjustments to the virtual robot cell so that the virtual positions and orientations of the virtual robots and virtual objects more accurately match the real positions and orientations of the real robots and real objects. These calibration adjustments will improve the robotic system by reducing the error rate based upon position and orientation errors.

The calibration refinement can be a continuous process throughout the manufacturing runtime. The robot cell calibration and robot specifics must fully correspond to the robot cell model of in the simulated virtual robot cell environment. With the calibration properly performed, the virtual robot cell will accurately match the robot and object positioning on the real robot cell scene.

Brief Description of the Drawings

FIG. 1 illustrates a coordinate system with a robot arm.

FIG. 2 illustrates an embodiment of a robot cell.

FIG. 3 illustrates an embodiment of an ArUco marker.

FIG. 4 illustrates an embodiment of G-codes for robot movement.

FIG. 5 illustrates an embodiment of JavaScript Object Notation (JSON) that shows the module, detail, and part object description data structure.

FIG. 6 illustrates a plurality of objects in simulated, measured and real robot cells.

FIG. 7 illustrates an embodiment of a virtual snapshot.

FIG. 8 illustrates an embodiment of a virtual snapshot.

FIG. 9 illustrates a camera coordinate system.

FIG. 10 illustrates an example of data format code.

FIG. 11 illustrates an example of object marker description code.

FIG. 12 illustrates an example of computer code for a robot cell scene description.

FIG. 13 illustrates an example of computer code for robot manipulator controls.

FIG. 14 illustrates an example of computer code for robot gripper control.

FIG. 15 illustrates a computer system.

Detailed Description

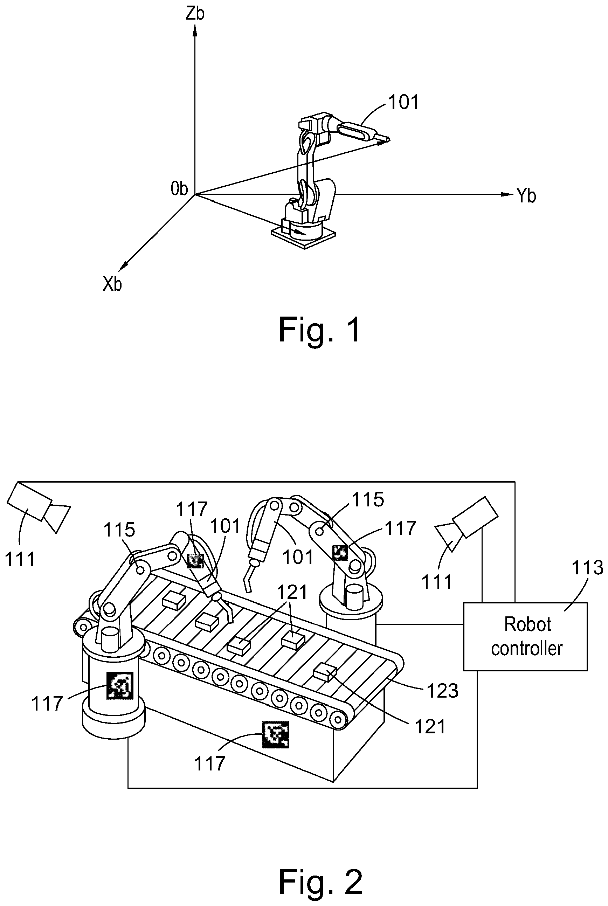

The present invention is directed towards a system and method for calibrating the positions of robots and objects in a virtual robot cell so that accurate real positions of robots and objects can be known by a robot controller. The calibration process can be used to match the position and orientation of the robot cell components. With reference to FIG. 1, a coordinate system with a robot arm 101 is illustrated which can be used for both the real and the virtual robot cell. The coordinate system has an X-axis, a Y-axis and a Z-axis and reference points in the robot cell can have position measurements X, Y, and Z as well as rotational positions RX, RY, and RZ which can describe the rotational orientations about the X, Y and Z axises. In this case, the position of the tip of the robot arm is identified based upon X, Y, and Z coordinates and the orientation is identified based upon RX, RY, and RZ. All robot and object positions in each robot cell can be defined with reference to the coordinate system. These measurements can be relative to a "Base Coordinate System" (sometimes referred to as World Coordinate System) which defines a common reference point which can be X = 0, Y = 0, and Z = 0 for a robot cell. This base coordinate system can be useful when multiple robots, devices, and objects are in the same robot cell as positions defined in Base Coordinates will be the same for all robots and devices.
In order for the robot cell to be functional, static relations between robot(s) and objects in the robot cell must be precisely calibrated before running the robots to process the objects. The static relations may also be updated on the fly during processing since manufacturing process cell setups can change due to changes in production or physical changes of the environment. Calibration techniques are able to calibrate the manipulator geometric model using different modeling, measurement and identification methods. The identified errors can be efficiently compensated for either by adjusting the controller inputs which can be the target points and/or by direct modification of the model parameters used in the robot controller.

With reference to FIG. 2, an embodiment of a robotic cell is illustrated. In this example, an assembly line robot cell is illustrated which includes two robots 101 which have rotational joints 115 and can rotate about their bases. The robots 101 interact with objects 121 on a moving conveyor belt 123. The robots 101, conveyor belt 123 and objects 121 are photographed by cameras 111. A robot controller 113 can be coupled to the cameras 111, robots 101, and conveyor belt 123.

In an embodiment, markers 117 can be applied to one or more points on the robots 101, the conveyor belt assembly 123 and objects 121. In an embodiment, the markers 117 can be ArUco markers which can be used for determining the locations and orientations of the markers in positioning robotic systems using computer vision from the cameras 111. ArUco markers are small 2D barcodes. Each ArUco marker 117 corresponds to an identifier which can be encoded into a small grid of black and white pixels. The ArUco marker 117 can be detected by the cameras and transmitted to the robot controller 113 which can include a processor running software. An ArUco decoding algorithm might be running on the processor of the robot controller 113 and can be capable of locating, decoding, and of estimating the pose location and rotational orientation in space of any ArUco markers 117 in the field of view of the cameras 111.

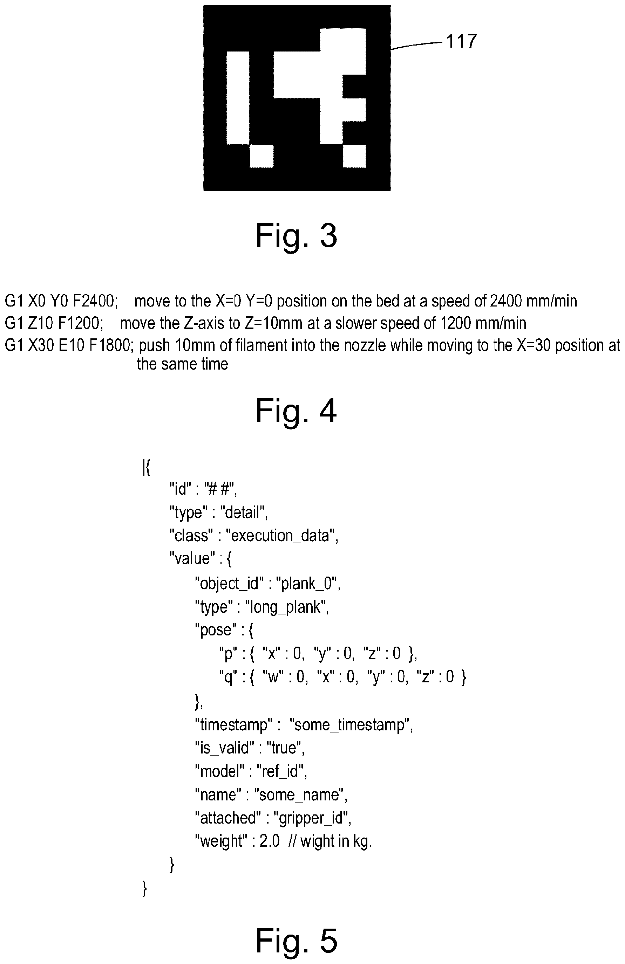

FIG. 3 illustrates an embodiment of an ArUco marker 117 which is a synthetic square marker composed by a wide black border and an inner binary matrix which determines its identifier. The black border facilitates its fast detection in the image and the binary codification allows its identification and the application of error detection and correction techniques. The marker size determines the size of the internal matrix. For instance, a marker size of 4x4 is composed by 16 bits. When the markers 117 are photographed, the resulting image can include ArUco markers and the marker detection process returns a list of detected markers 117. Each detected marker can include the positions of the four corners in the marker 117 and the identification of the marker 117. The marker 117 detection process can include two main steps. 1) Detection of marker candidates. In this step the image is analyzed in order to find square shapes that are candidates to be markers 117. The analysis can begin with an adaptive thresholding to segment the markers 117, then contours are extracted from threshold images and those that are not convex or not approximate to a square shape are discarded. 2) After the candidate marker 117 detection, the system can determine if the candidate markers are actually markers 117 by analyzing their inner codification. The marker bits of each marker are extracted by perspective transformation applied to obtain the marker in its canonical form. Then, the canonical image can be processed to separate white and black bits. The marker image can be divided in different cells according to the marker size and the border size and the amount of black or white pixels on each cell is counted to determine if it is a white or a black bit.

In other embodiments, the location and rotational orientation of the robots 101, objects 121 and conveyor belt 123 can be determined without markers 117, using advanced computer vision algorithms implementations. In these embodiments, the cameras 111 can use the visible features on the robots 101, objects 121 and conveyor belt 123 instead of markers. In an embodiment, the cameras 111 can apply a photogrammetry process which can convert the photographs from the cameras 111 into 3D models of the robots 101, objects 121 and conveyor belt 123. All the dimensions, distances and object identification of the real robots 101, objects 121 and conveyor belt 123 can be done programmatically by the robot controller 113 to create virtual robots, virtual objects and virtual conveyor belt in virtual robot cells. The positions and orientations of the virtual robot cell components can be compared to the positions and orientations of the real robot cell components to determine the calibration of the robot cells. This can be done on an ongoing basis so that the robot cell is constantly improving its calibration.

The robot controller 113 includes a computing unit that executes the software program for the robot operations during the manufacturing process. The robot controller 113 can use G-codes to control the robot 101 arm movements. FIG. 4 illustrates an example of G-codes used by the robot controller to control the movement of the robot. The G-codes can provide the exact coordinates of the robot arm positions which can be hardcoded into the program. Similar hardcoded position and orientation values can be used for any object orientation in the robot cells controlled by the robot controller.

FIG. 5 illustrates an example listing of the JavaScript Object Notation (JSON) that shows the module, detail, and part object description data structure, where coordinates of the robot arm pose is set for an "object_id" which is a "long plank" where the pose can be described by a left point coordinate and a right point coordinate of the plank object. The coordinates are set by quaternion where X, Y, and Z are coordinates in 3D space, and Q is the quaternion.

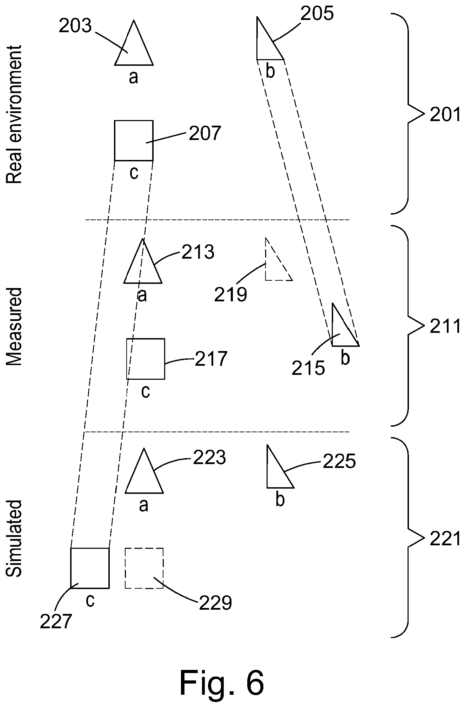

FIG. 6 illustrates a plurality of objects a 223, b 225, c 227 and c corrected 229 in a simulated virtual robot cell 221, objects a 213, b 215, c 217 and b corrected 219 in a measured robot cell 211 and real objects a 203, b 205, and c 207 in a real environment robot cell 201. The measured positions in the measured robot cell 211 used in robot program as well as the simulated object's a 223, b 225, c 227 positions in the simulated robot cell 221 might not always correspond to true positions a 203, b 205, and c 207 in the real environment robot cell 201 in the real world. In this example, the measured robot cell 211 has a position error with b 215 which should have been located at 219. Similarly, the simulated robot cell 221 has a position error with c 227 which should have been located at 229. By correcting these location errors, the robot controller can adjust the simulated virtual robot cell and the measured robot cell object positions to match the real robot cell. There are two goals for the robot cell calibration: 1) set the proper values of the object's positions for robot operation, and 2) set the proper values of the object's positions in the simulated environment.

General calibration can include objects markings which as described above are photographed and the identifications, positions and orientations of the markings are detected by a marking algorithm when the photos of the markings are processed. Each object in a robot cell scene can be marked with a marker such as an ArUco marker. Commonly the marked objects can include: robot arms, robot basement point, robot gripper, walls, cameras, ceiling, tables, automatic guided vehicles (AGVs) etc. The objects are identified by computer vision algorithm, dimensions and positions are measured. In an embodiment, for example, the markers can be ArUco markers and the computer vision algorithm can analyze the ArUco marking which can result in an identification of the object associated with the ArUco marking. The acquired object parameters from the computer vision algorithm can also identify the coordinate position and angular position of the marking. The robot controller can use the position data to setup the coordinates of the real objects in robot program in robot controller and setup the coordinates of the objects in the virtual robot cell environment in a robot cell simulator. While it is possible to manually measure the locations and orientations of the objects using measuring tools such as a tape measurer and a laser measure this manual process is very impractical. A more automated measuring method will be more efficient.

In a pose calibration method, the objects can be photographed in a plurality of different poses. The system can perform pose calibration, control teaching and robot program initial setup. The number of pre-defined robot poses can be set sequentially. In an embodiment, the most critical poses from the operator standpoint can have specific characteristics such as: joints between assembled components that have an angle from 0 to 180 degrees; a last joint to 45 degrees; two last joints to 45 degrees; movements where the floor is touched by a gripper robot arm; movements where an operated object is touched by the robot gripper etc.

In a manual calibration process, the robot arm can be physically moved to the desired position by using a joystick or pushbuttons on a handheld device which controls the motors moving the robot. When desired orientation and position accuracy have been obtained, the position and orientation can be stored by the robot program running on the robot controller in a computer memory. This process is repeated until every position in the robot program has been taught and stored.

The robot controller can perform a simulated virtual environment calibration refinement and verification. Each pose from the calibration set of poses should be reproduced in the simulated virtual environment using values and commands from robot program, stored in memory. If deviations from the real robot arm and tool positions are determined by the robot controller, the corrections to the positions of the robot arms and tools can be introduced by the robot controller in the virtual robot cell simulator. As an alternative to the above described process a fuzzy interpolation technique for determining positioning error compensation can be used by the robot controller 113.

The calibration process performed by the robot controller 113 in the real environment should also be performed in a corresponding matching simulated virtual environment. The problem is that the last two steps could be quite effort consuming since they require very precise measurements and updates for each pose change. The same process should be repeated each time if objects' (cameras, robots, markers) positions change over time during the manufacturing.

An embodiment addresses the above-described problems, and provides a flexible, automated approach for calibration of the robotic cell and setting of the simulated environment accordingly. The embodiment provides a solution for accurate modeling of the production environment. Though for concreteness of the explanations we consider the robotized factory usecase, the proposed design might be effectively used in many other cases and might have variety of implementations. A setup of components in a robot cell scene in both the real environment and the simulated virtual environment is provided. The robot cell components including the robots, cameras, tools and objects can be installed and markers can be placed on these robot cell components. As discussed, these markers can be ArUco markers or, in other embodiments, the visible features of the components can be used rather than markers. In an embodiment, the series of robot joint's poses is pre-defined (N_Poses- number of poses).

In this embodiment, the setup of the robot cell components is first done in the simulator and then the robot controlling software program is updated. The proposed scenario for improvement of the calibration refinement and verification includes: initiating the movement of the virtual robot in a simulator robot cell which includes sending G-code or using other available robot control commands to the virtual robot in the virtual robot cell and creating sets of snapshots (pictures) with different pose positions of the robot arm in the virtual simulated robot cell environment. The snapshots of the virtual components in the virtual robot cell are performed by virtual cameras. For each pose in the plurality of poses, the components and/or camera can be slightly altered. For example, each pose can have a slight change in the positions of the cameras such as a change of angles of the cameras or a change of positions of the cameras. The poses can have slightly changed positions of markers, such as ArUco markers, on the robot cell components. At the end of this stage, the virtual cameras will produce a series of virtual snapshots per each virtual pose position of the virtual robot arm. Total amount of virtual pictures taken of the virtual robot cell environment is: N_VirtualSnapshots = N_Poses*N_Cameras*N_CameraPositions*N_Markers *N_MarkerPositions

All the robot movements are recorded into the script/program for future replay. The recorded G-code script is also executed in the corresponding real robot cell environment. Each pose of the robot is snapshotted with real cameras. At the end of the real robot pose snapshot stage the robot controller has real snapshots for each pose. Total amount of pictures taken at real robot cell environment is N_RealSnapshots = N_Poses. The robot controller can then compare each virtual snapshot to each real snapshot for each pose from N_Poses. N _VirtualSnapshots. The robot controller can then find the closest matching pair of virtual and real snapshot images. Once the closest virtual snapshot and real snapshot image pair are found, the robot controller can calculate the deviation between simulated positions of the cell components from the virtual robot cell and real robot cell. Various metrics could be used for comparison of simulated and real snapshot images, for example, simple mean square pixel error or mean square error in poses of detected markers or some more sophisticated metrics such as image synthesis methods.

The detected image differences are applied to the simulator virtual robot cell as corrective coefficients or updates of the coordinates to specify a correct position of the virtual camera, virtual marker or virtual robot. If needed, this process can be repeated to obtain better virtual robot cell accuracy. The detected image differences are also applied to the program of the real robot. The values of changed parameters can depend on the target precision of the calibration, which is needed to reach an acceptable accuracy. The position change of a calibrated object can be between 0-50 millimeters, the camera's angle change can be between 0-15 degrees. In an embodiment, the robot positioning errors (deviations) are calculated using parameters, taken from the real robot (joints positions) and the same from the simulator.

If needed, the robot controller can perform coordinate system transformations during the calibration process. The robot controller can calculate the object's position errors using the virtual robot cell and real robot cell snapshot data obtained from the computer vision algorithms. As discussed, the image data from simulated and real-world cameras are compared for a plurality of sets of snapshots. The sets of snapshots can include images at various adjusted positions of the cameras (real and virtual) as well as movement and/or rotation of the other objects in the robot cells. The position changes in the virtual environment can be done automatically according to the predefined script, for example some random positions series could be defined.

During the real and virtual robot cell image comparisons, Artificial Intelligence image comparison algorithms might be used or the image comparisons might be performed by humans. The closeness of the virtual and real pictures under comparison can be determined by some pre-defined settings on this robot controller process. The final decision on the closeness of the images can impact on the robot cell calibration accuracy. If the accuracy is not satisfactory, the step of capturing real and virtual images of the robot cells can be repeated with smaller changes in the simulated virtual environment. For example, instead of changing the positions of the real and the virtual cameras and objects by centimeters, the camera and object shift for the set of positions can be changed by much smaller movements such as millimeters. In other embodiments, various metrics could be used for comparison of the simulated and the real robot cell images and the differences can be determined by simple mean square pixel error, mean square error or other suitable error detection methods in poses of the detected real and virtual markers.

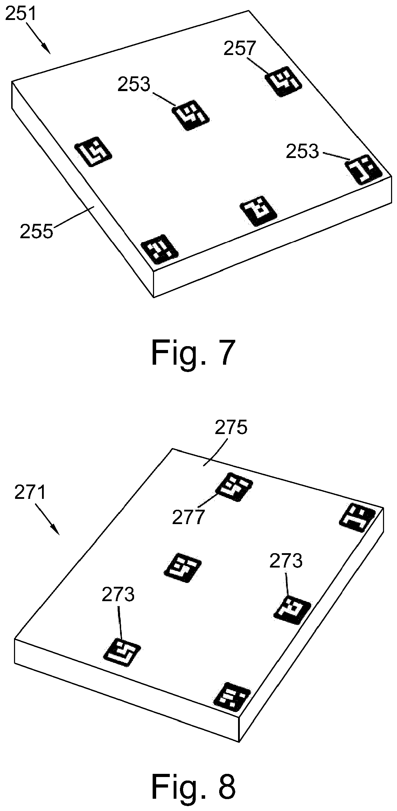

With reference to FIG. 7 an example of a virtual snapshot 251 taken by a virtual camera is illustrated with a plurality of virtual markers 253 on a virtual platform 255 in a virtual robot cell and with reference to FIG. 8 an example of a real snapshot 271 taken by a real camera is illustrated with a plurality of real markers 273 on a real platform 275 in a real robot cell. The virtual snapshot 251 can be slightly out of alignment with the real snapshot 271 so that alignment correction will be required for the virtual robot cell 251 to accurately simulate the real robot cell 271. The virtual markers 253 can be virtual ArUco markers and the real markers 273 can be real ArUco markers.

For the calibration process, the simulated and real location for each virtual marker 257 in the virtual snapshot 251 and corresponding real marker 277 in the real snapshot 271 can be compared and the differences can then be determined A computer vision algorithm such as OpenCV can extract the identification and location data from the virtual snapshot 251 and the real snapshot 271. In this example, the virtual marker 257 and the real marker 277 can be ArUco markers having the identification number 78. The data structure for the locations can include x, y, z and w values. For example, for the virtual snapshot 251, the location data can be represented as JSON.

For the virtual snapshot 251, the 257 data can be:

```
"q": {
"x": "0.70638638734817505",
"y": "-0.61799991130828857",
"z": "0.2440260648727417",
"w": "0.24401943385601044"
},
```

For the real snapshot 271, the corresponding 277 data can be:

```
"q": {
"x": "0.80481750563863873",
"y": "-0. 13082886179999157",
"z": "0. 2741724402606487",
"w": "0. 43382440195601044"
},
```

The differences between the virtual snapshot 251 and the real snapshot 271 can be:

```
"q": {
"x": " -0.098431118",
"y": " -0.48717105",
"z": " -0.030146375",
"w": " -0.189804968"
},
```

The difference data can be used to adjust either the simulated robot cell location coordinates or the real robot cell location coordinates. While it can be normal to apply the correction adjustments to the virtual locations of the virtual components and virtual markers in the virtual robot cell, it is also possible to apply the correct adjustments to the real locations of the real components and real markers. Either method can be accurate for performing the calibration process.

In different embodiments, the intrinsic parameters of real and virtual cameras used in calibration can be known in advance, i.e. the camera itself should be calibrated using some traditional method, such as chessboard calibration. The real and virtual camera values can include: focal length, principal point offset and distortion coefficients. Virtual cameras should be set up with the same intrinsic camera settings as the real cameras so the same metrics can be used to directly compare images. If one is using detected marker or other object positions to define a metric, proper intrinsic real and virtual camera settings should be taken into account by computer vision algorithms.

If the robot cell is using markers on objects for position-based metric measurements, then to avoid calibration degradation, there should be one static marker object that corresponds to the center of the world coordinate system with a fixed position. The number and placement of markers on robot cell objects defining the position metrics should be sufficient to avoid other calibration degradations. For example, simultaneous displacement of different objects and cameras in the real and virtual robot cells should have some impact on detected marker object poses.

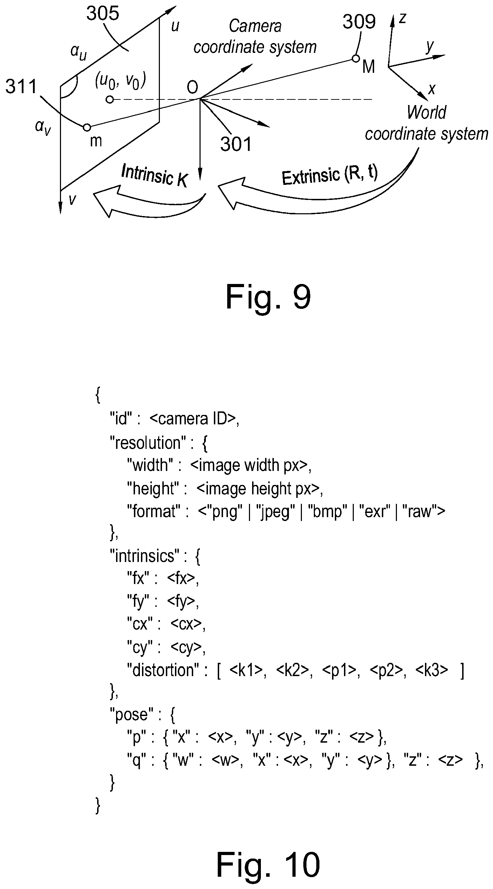

As discussed, the system and method utilize both real and virtual cameras. In order to accurately match images of the virtual cameras to the real cameras, the parameters of the virtual cameras must match the corresponding real cameras and things such as distortion must also be virtually reproduced. Real cameras have some level of distortion in the output images which negatively affects the robot calibration's accuracy. Therefore, a successful extrinsic calibration requires that the cameras' intrinsic parameters are well known, which means that the cameras must be calibrated before performing the extrinsic robot calibration. Pinhole camera parameters can be represented in a matrix that is referred as camera matrix. With reference to FIG. 9, an optical center of the camera O 301 denotes the origin of the camera's coordinate system and the axes of this coordinate system define an image plane 305. The position of a 3D point M 309 and the coordinates of its corresponding projection to the point m 311 in the image plane 305 are shown. The position of 3D point M 309 can be represented by equation (1). The position of m 311 in the image plane 305 can be represented by equation (2).

$$\mathbf{M} = [\mathbf{X}, \mathbf{Y}, \mathbf{Z}]^{\mathbf{T}}, \qquad (1)$$

$$\mathbf{m} = [\mathbf{u}, \mathbf{v}]^{\mathbf{T}}. \qquad (2)$$

The ray line, which connects point M 309 and the camera's optical center O 301 and intersects the image plane at point m 311 is also shown. The corresponding augmented vectors of 2D and 3D points are denoted respectively as the equations (3) and (4):

$$\widehat{\mathbf{M}} = [X, Y, Z, 1]^{T}, \qquad (3)$$

$$\widehat{\mathbf{m}} = [u, v, 1]^{T}. \qquad (4)$$

The intrinsic or internal parameters of the camera can be defined as the 3 by 3 intrinsic matrix shown in the equation (5) below:

$$\mathbf{K} = \begin{bmatrix} \alpha_u & \gamma & u_0 \\ 0 & \alpha_v & v_0 \\ 0 & 0 & 1 \end{bmatrix}, \qquad (5)$$

The $\alpha_u$ and $\alpha_v$ values denote the focal lengths in u and v axis directions respectively and ($u_0$, va) are the coordinates at the center of the image plane and $\gamma$ is a skew coefficient. If the image plane axes are orthogonal to each other, then the skew coefficient is equal to zero. Extrinsic, or external, parameters of the camera represent a transformation from a 3D world coordinate system to a 3D coordinate system of the camera equation (6) which includes rotation and translation data.

$$[\mathbf{R} \quad \mathbf{t}] = \begin{bmatrix} r_{11} & r_{12} & r_{13} & t_1 \\ r_{21} & r_{22} & r_{23} & t_2 \\ r_{31} & r_{32} & r_{33} & t_3 \end{bmatrix}, \qquad (6)$$

$R$ is a rotation matrix, t is a translation vector. The 3-by-4 matrix shown can consist of both extrinsic and intrinsic parameters. The matrix of parameters can be called a camera projection matrix, or a camera matrix, and it could be defined in equation (7) below.

$$\mathbf{C} = \mathbf{K}[\mathbf{R} \quad \mathbf{t}]. \qquad (7)$$

Using equations (3), (4), and (7), it is possible to define the relationship between 3D point M and its image projection by equation (8) where s is an arbitrary scale factor.

$$s\widetilde{\mathbf{m}} = \mathbf{K}[\mathbf{R} \quad \mathbf{t}]\widetilde{\mathbf{M}} \equiv \mathbf{C}\widetilde{\mathbf{M}}, \qquad (8)$$

The 3D world points are transformed into 3D camera model coordinates using the external parameters. Given 3D points camera coordinates are projected onto the image plane using the internal camera parameters (Eq. 5). To estimate the camera parameters, 3D world points and their corresponding 2D image points are used. In order to get those correspondences (samples), multiple images of a calibration pattern could be used, such as a checkerboard or circle grid. Thus, the camera parameters can be determined.

Examples of basic intrinsic camera parameters are listed below:

| | |
|---|---|
| *f* | effective focal length of the pin-hole camera. |
| *kappa1* | 1st order radial lens distortion coefficient. |
| *Cx, Cy* | coordinates of center of radial lens distortion and the piercing point of the camera coordinate frame's Z axis with the camera's sensor plane. |
| *Rx, Ry, Rz* | rotation angles for the transform between the world and camera coordinate frames. |
| *Tx, Ty, Tz* | translational components for the transform between the world and camera coordinate frames. |

Examples of extrinsic or exterior parameters are listed below:

| | |
|---|---|
| *Rx, Ry, Rz* | rotation angles for the transform between the world and camera coordinate frames. |
| *Tx, Ty, Tz* | translational components for the transform between the world and camera coordinate frames. |

The data formats used by the robot controller for a robot cell scene implementation can be via a representational state transfer (REST) interface. With reference to FIG. 10, an example of a data format is illustrated. The variables in the data format can be:

| | |
|---|---|
| Id | Unique camera ID |
| Width | width of the frame in pixels |
| Height | height of the frame in pixels |

(continued)

| | |
|---|---|
| Format | picture encoding format for example, png, jpeg, bmp, exr, raw, etc. In an embodiment, the default may be png. |
| Intrinsics | internal parameters of the camera: fx, fy - focal length. By default fx = fy = width/2. cx, cy - optical center. By default cx = width / 2, cy = height / 2. Distortion-distortion (k1, k2, p1, p2, k3). |
| Pose | position of the camera in the world coordinate system: p - position in meters. Q - angle is set via quaternion. |

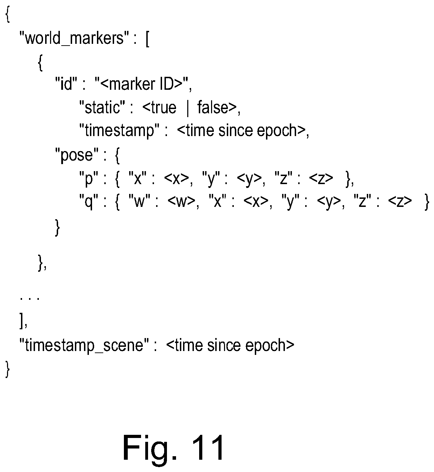

With reference to FIG. 11, the object marker description in a robot cell can be represented by scene metainformation. Data can include:

| | |
|---|---|
| World-markers | array of markers which can be ArUco markers on the scene |
| Id | ArUco marker ID |
| Pose | Position of the marker relative to the world coordinates where p is position in meters and q is angle set via quaternion |
| Static | type of the marker |
| Timestamp | milliseconds since (00:00:00) 1 Jan. 1970 |
| Timestamp _scene | milliseconds since (00:00:00) 1 Jan. 1970 |

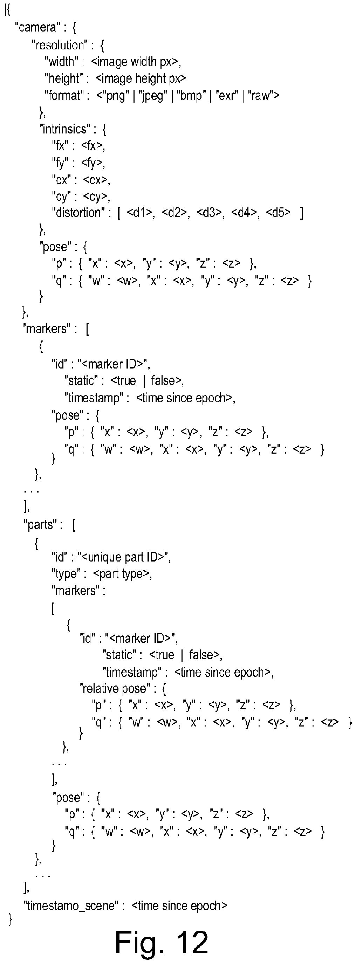

FIG. 12 is an example of computer code that is a robot cell scene description.

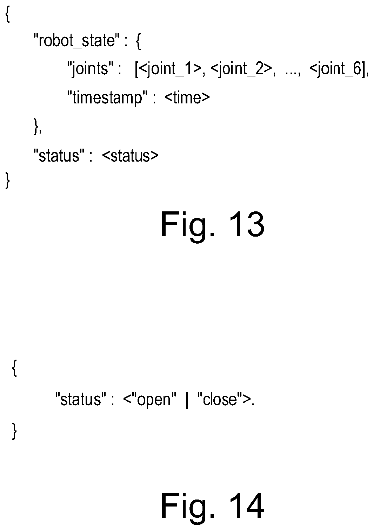

FIG. 13 is an example of robot manipulator controls. Variables include:

| | |
|---|---|
| Joints | the values of the angles of the joints of the manipulator, an array of angles in radians. |
| Timestamp | milliseconds since (00:00:00) 1 Jan. 1970 |
| Status | position status at execution of a trajectory. At the beginning of the execution, the position status can be equal to "start", then - "update" and finally at the end of the trajectory - "done". Without a parcel with the "start" status, the manipulator control will not start. |

With reference to FIG. 14, code representing gripper control is illustrated. Variables include:
Status the desired state of the gripper which can be open when the gripper is open and closed when the gripper is closed.

In other embodiments, various other types of robots can be with the system and simulated in a virtual robotic cell. Automation of a compensation of position errors for calibration of the robotized environment with robot software programing settings and the virtual environment is implemented. This allows to optimize the process of tuning the robotic cell environment and assures precise positioning for the robot control and simulation in the assembly factory. The system can decrease the time of positioning parameters' alignment within the real and virtual environments. The system may also minimize the tasks needed for accurate compensation of robot cells compared with previously known methods. The disclosed embodiments can be applicable to any manufacturing environment and any objects, which might be virtualized in the a software simulation. The disclosed embodiments aim to further increase robotized product line effectiveness and decrease production cost ($/unit) via elimination of the human involvement and automatization.

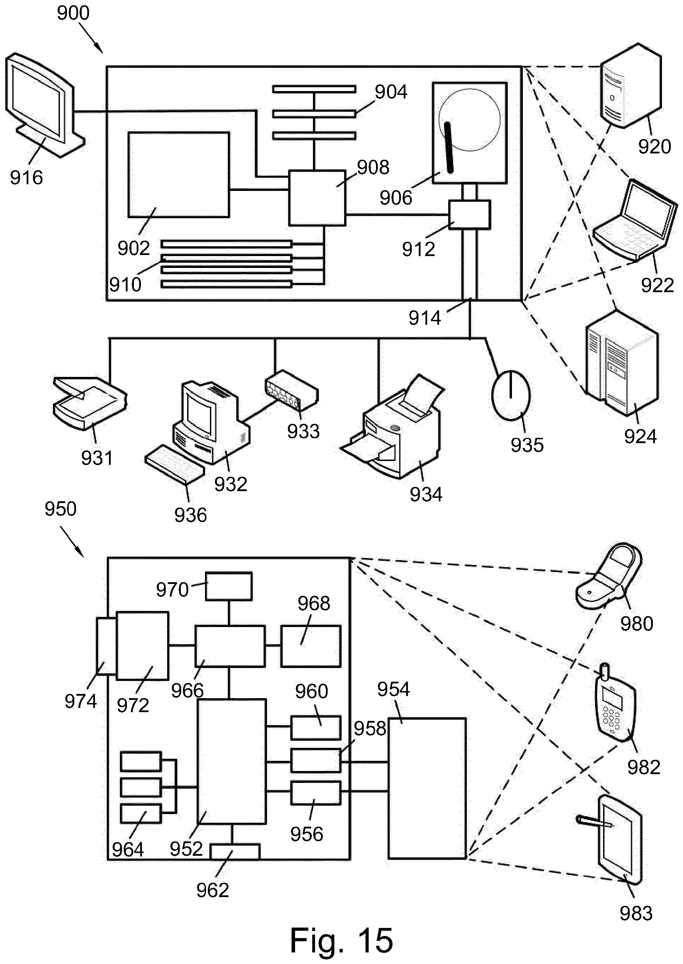

FIG. 15 shows an example of a generic computing device 900 and a generic mobile computing device 950, which may be used to implement the processes described herein, including mobile-side and server-side processes for installing a computer program from a mobile device to a computer. Computing device 900 is intended to represent various forms of digital computers, such as laptops, desktops, workstations, personal digital assistants, servers, blade servers, mainframes, and other appropriate computers. The computing device 950 is intended to represent various forms of mobile devices, such as personal digital assistants, cellular telephones, smartphones, and other similar computing devices. Components shown here, their connections and relationships, and their functions, are meant to be exemplary only, and are not meant to limit implementations of the embodiments described and/or claimed in this document.

The computing device 900 includes a processor 902, memory 904, a storage device 906, a high-speed interface 908 connecting to memory 904 and high-speed expansion ports 910, and a low speed interface 912 connecting to a low speed expansion port 914 and the storage device 906. Each of the components: the processor 902, the memory 904, the storage device 906, the high-speed interface 908, the high-speed expansion ports 910, and the low speed interface 912 are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to the high speed interface 908. In other implementations, multiple processors and/or multiple busses may be used, as appropriate, along with multiple memories and types of memory.

Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier may be a non-transitory computer- or machine-readable storage medium, such as the memory 904, the storage device 906, or memory on the processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to the memory 904, the display 916 (e.g., through a graphics processor or accelerator), and to the high-speed expansion ports 910, which may accept various expansion cards (not shown). In the implementation, the low-speed controller 912 is coupled to the storage device 906 and the low-speed expansion port 914. The low-speed expansion port 914, which may include various communication ports (e.g., USB, Bluetooth, Ethernet, wireless Ethernet), may be coupled to one or more input/output devices, such as a keyboard 936 in communication with a computer 932, a pointing device 935, a scanner 931, or a networking device 933 such as a switch or router, e.g., through a network adapter.

The computing device 900 may be implemented in a number of different forms, as shown in Figure 15. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a Microdrive, solid state memory or other device, to provide additional storage. Each of the components of computing device 950: the processor 952, the memory 964, the display 954, the communication interface 966, and the transceiver 968 are interconnected using various busses, and several of the components may be mounted on a common motherboard or in other manners as appropriate.

The processor 952 can execute instructions within the computing device 950, including instructions stored in the memory 964. The processor 952 may be implemented as a chipset of chips that include separate and multiple analog and digital processors. The processor 952 may provide, for example, coordination of the other components of the device 950, such as control of user interfaces, applications run by the device 950, and wireless communication by the device 950.

The processor 952 may communicate with a user through a control interface 958 and a display interface 956 coupled to the display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provided in communication with processor 952, so as to enable near area communication of device 950 with other devices. The external interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 974 may also be provided and connected to the device 950 through an expansion interface 972, which may include, for example, a SIMM (Single In Line Memory Module) card interface. The expansion memory 974 may provide extra storage space for the device 950, or may also store applications or other information for the device 950. Specifically, the expansion memory 974 may include instructions to carry out or supplement the processes described above, and may include secure information also. Thus, for example, the expansion memory 974 may be provided as a security module for the device 950, and may be programmed with instructions that permit secure use of the device 950. In addition, secure applications may be provided via the SIMM cards, along with additional information, such as placing identifying information on the SIMM card in a non-hackable manner.

The memory 964 may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, the expansion memory 974, memory on the processor 952, or a propagated signal that may be received, for example, over the transceiver 968 or the external interface 962.

The device 950 may communicate wirelessly through the communication interface 966, which may include digital signal processing circuitry where necessary. The communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, Wi-Fi, or other such transceiver (not shown). In addition, a GPS (Global Positioning System) receiver module 970 may provide additional navigation- and location-related wireless data to the device 950, which may be used as appropriate by applications running on the device 950.

The device 950 may also communicate audibly using an audio codec 960, which may receive spoken information from a user and convert it to usable digital information. The audio codec 960 may likewise generate audible sound for a user, such as through a speaker, e.g., in a handset of the device 950. Such sound may include sound from voice telephone calls, may include recorded sound (e.g., voice messages, music files, etc.) and may also include sound generated by applications operating on the device 950.

The computing device 950 may be implemented in a number of different forms, as shown in the figure. For example, it may be implemented as a cellular telephone 980. It may also be implemented as part of a smartphone 982, personal digital assistant, a tablet computer 983 or other similar mobile computing device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

The present disclosure, in various embodiments, includes components, methods, processes, systems and/or apparatus substantially as depicted and described herein, including various embodiments, subcombinations, and subsets thereof. Those of skill in the art will understand how to make and use the present disclosure after understanding the present disclosure. The present disclosure, in various embodiments, includes providing devices and processes in the absence of items not depicted and/or described herein or in various embodiments hereof, including in the absence of such items as may have been used in previous devices or processes, e.g., for improving performance, achieving ease and/or reducing cost of implementation. Rather, as the following claims reflect, inventive aspects lie in less than all features of any single foregoing disclosed embodiment.

**Claims**

1. A method for calibration of a robot cell (201) comprising:

   providing a camera (111), a robot arm (101), and a robot controller (113) coupled to the robot and the camera, the robot controller having a processor running a computer program which generates a virtual environment with a virtual camera, and a virtual robot arm;
   creating by the robot controller, a set of virtual snapshots by the virtual camera of the virtual robot arm in the virtual environment in a plurality of virtual poses;
   taking a set of real snapshots by the camera of the robot arm in a real environment in a plurality of real poses which match the plurality of virtual poses;
   comparing by the robot controller, the set of virtual snapshots to the set of real snapshots to find the closest matching pair of virtual snapshot and real snapshot by means of an artificial intelligence image comparison algorithm or by determining differences in poses of real markers (273, 277) and virtual markers (253, 257) detected in the set of real snapshots and the set of virtual snapshots;
   determining by the robot controller, a reference virtual snapshot and a reference real snapshot from the closest matching pair of virtual snapshot and real snapshot;
   determining a location difference and/or an orientation difference between the reference virtual snapshot and the reference real snapshot;
   adjusting a calibration of the virtual robot cell by the robot controller based upon the location difference and/or the orientation difference between the reference virtual snapshot and the reference real snapshot;
   operating the virtual robot arm by the robot controller after the adjusting of the calibration of the virtual robot cell; and
   determining by the robot controller that the calibration of the virtual robot cell is within a predetermined required accuracy and adjusting the calibration of the virtual robot cell.

2. The method of claim 1 wherein the set of virtual snapshots by the virtual camera are taken at a plurality of different virtual camera angles and the set of real snapshots by the camera are taken at a plurality of different camera angles.

3. The method of claim 2 wherein the plurality of different virtual camera angles are within a virtual camera angle range of 20 degrees and the plurality of different camera angles are within a camera angle range of 20 degrees.

4. The method of claims 1 or 2 further comprising:

   providing a virtual marker (253, 257) on the virtual robot; and
   providing a real marker (273, 277) on the robot;
   wherein the virtual marker and the real marker are two dimensional barcodes and the first virtual snapshot (251) includes the virtual marker and the first real snapshot (271) includes the real marker.

5. The method of claim 4 wherein the robot controller determines a virtual location and a virtual orientation of the virtual robot based upon the first virtual snapshot that includes the virtual marker and the robot controller determines a real location and a real orientation of the robot based upon the first real snapshot that includes the real marker.

6. The method of claim 1 further comprising:

   providing a virtual object within an operating range of the virtual robot arm in the virtual environment wherein the virtual object is in the set of virtual snapshots; and
   providing an object within an operating range of the robot arm wherein the object is in the set of real snapshots.

7. The method of claim 1 further comprising:

   providing a virtual object (255) having a virtual marker (253, 257) within an operating range of the virtual robot arm in the virtual environment wherein the virtual object and the virtual marker are in the set of virtual snapshots (251); and
   providing an object (275) having a marker (276, 277) within an operating range of the robot arm wherein the object and the marker are in the set of real snapshots (271).

8. The method of claim 7 further comprising:

providing a virtual conveyor belt wherein the virtual objects are on the virtual conveyor belt; and
providing a conveyor belt (123) wherein the objects (121) are on the conveyor belt.

9. The method of claims 7 or 8 wherein the set of virtual snapshots by the virtual camera are taken with the virtual object in a plurality of different virtual positions and the set of real snapshots are taken with the object at a plurality of different positions.

10. The method of claim 9 wherein the plurality of different virtual positions for the virtual object are within a virtual range of 50 millimeters and the plurality of different positions for the object are within a range of 50 millimeters.

11. The method of claim 1 wherein the virtual robot arm has a virtual joint and the plurality of virtual poses include a plurality of different virtual joint angles and wherein the robot arm has a joint (115) and the plurality of poses include a plurality of different joint angles.

12. The method of claim 1 wherein the location difference and/or the orientation difference between the reference virtual snapshot and the reference real snapshot are determined by square pixel error or means square error calculations.

13. The method of claim 1 wherein the location difference and/or the orientation difference between the reference virtual snapshot and the reference real snapshot are calculated from computer vision algorithms applied to the set of virtual snapshots by the virtual camera and the set of real snapshots by the camera.

14. The method of claim 1 further comprising:

calibrating the camera to determine at least one of: focal length, principle point offset and distortion coefficient; and
configuring the virtual camera to have the same virtual focal length, virtual principle point offset, or virtual distortion coefficient.

15. The method of claim 1 wherein the plurality of virtual poses and the plurality of real poses are determined by a predefined pose script.

**Patentansprüche**

1. Verfahren zur Kalibrierung einer Roboterzelle (201), umfassend:

Bereitstellen einer Kamera (111), eines Roboterarms (101) und einer Robotersteuerung (113), die an den Roboter und die Kamera gekoppelt ist, wobei die Robotersteuerung einen Prozessor hat, auf dem ein Computerprogramm läuft, das eine virtuelle Umgebung mit einer virtuellen Kamera und einen virtuellem Roboterarm generiert;
Erzeugen eines Satzes von virtuellen Momentaufnahmen mittels der virtuellen Kamera des virtuellen Roboterarms in der virtuellen Umgebung in einer Vielzahl virtueller Stellungen mittels der Robotersteuerung;
Aufnehmen eines Satzes realer Momentaufnahmen mittels der Kamera des Roboterarms in einer realen Umgebung in einer Vielzahl realer Stellungen, die mit der Vielzahl der virtuellen Stellungen übereinstimmt;
Vergleichen des Satzes der virtuellen Momentaufnahmen mit dem Satz der realen Momentaufnahmen mittels der Robotersteuerung, um das am besten übereinstimmende Paar von virtueller Momentaufnahme und realer Momentaufnahme mittels eines Bildvergleichsalgorithmus mit künstlicher Intelligenz (KI) oder durch Bestimmen von Differenzen der Stellungen durch reale Markierungen (273, 277) und virtuelle Markierungen (253, 257) zu finden, die in dem Satz der realen Momentaufnahmen und dem Satz der virtuellen Momentaufnahmen detektiert werden;
Bestimmen einer virtuellen Referenzmomentaufnahme und einer realen Referenzmomentaufnahme mittels der Robotersteuerung aus dem am besten übereinstimmenden Paar von virtueller Momentaufnahme und realer Momentaufnahme;
Bestimmen einer Ortsdifferenz und/oder einer Orientierungsdifferenz zwischen der virtuellen Referenzmomentaufnahme und der realen Referenzmomentaufnahme;

Justieren einer Kalibrierung der virtuellen Roboterzelle mittels der Robotersteuerung basierend auf der Ortsdifferenz und/oder der Orientierungsdifferenz zwischen der virtuellen Referenzmomentaufnahme und der realen Referenzmomentaufnahme;

Bedienen des virtuellen Roboterarms mittels der Robotersteuerung nach dem Justieren der Kalibrierung der virtuellen Roboterzelle; und

Bestimmen, dass die Kalibrierung der virtuellen Roboterzelle innerhalb einer vorbestimmten erforderlichen Genauigkeit liegt, mittels der Robotersteuerung, und Justieren der Kalibrierung der virtuellen Roboterzelle.

2. Verfahren nach Anspruch 1, wobei der Satz der virtuellen Momentaufnahmen mittels der virtuellen Kamera in einer Vielzahl unterschiedlicher virtueller Kamerawinkel aufgenommen wird, und der Satz der realen Momentaufnahmen mittels der Kamera in einer Vielzahl unterschiedlicher Kamerawinkel aufgenommen wird.

3. Verfahren nach Anspruch 2, wobei die Vielzahl der unterschiedlichen virtuellen Kamerawinkel innerhalb eines virtuellen Kamerawinkelbereichs von 20 Grad ist und die Vielzahl der unterschiedlichen Kamerawinkel innerhalb eines Kamerawinkelbereichs von 20 Grad sind.

4. Verfahren nach Anspruch 1 oder 2, des Weiteren umfassend:

Bereitstellen einer virtuellen Markierung (253, 257) auf dem virtuellen Roboter; und

Bereitstellen einer realen Markierung (273, 277) auf dem Roboter;

wobei die virtuelle Markierung und die reale Markierung zweidimensionale Barcodes sind, und die erste virtuelle Momentaufnahme (251) die virtuelle Markierung einschließt und die erste reale Momentaufnahme (271) die reale Markierung einschließt.

5. Verfahren nach Anspruch 4, wobei die Robotersteuerung einen virtuellen Ort und eine virtuelle Orientierung des virtuellen Roboters basierend auf der ersten virtuellen Momentaufnahme bestimmt, die die virtuelle Markierung einschließt, und die Robotersteuerung einen realen Ort und eine reale Orientierung des Roboters basierend auf der ersten realen Momentaufnahme bestimmt, die die reale Markierung einschließt.

6. Verfahren nach Anspruch 1, des Weiteren umfassend:

Bereitstellen eines virtuellen Objekts innerhalb eines Arbeitsbereichs des virtuellen Roboterarms in der virtuellen Umgebung, wobei das virtuelle Objekt sich in dem Satz der virtuellen Momentaufnahmen befindet; und

Bereitstellen eines Objekts innerhalb eines Arbeitsbereichs des Roboterarms, wobei das Objekt sich in dem Satz der realen Momentaufnahmen befindet.

7. Verfahren nach Anspruch 1, des Weiteren umfassend:

Bereitstellen eines virtuellen Objekts (255) mit einer virtuellen Markierung (253, 257) innerhalb eines Arbeitsbereichs des virtuellen Roboterarms in der virtuellen Umgebung, wobei das virtuelle Objekt und die virtuelle Markierung sich in dem Satz der virtuellen Momentaufnahmen (251) befindet; und

Bereitstellen eines Objekts (275) mit einer Markierung (276, 277) innerhalb eines Arbeitsbereichs des Roboterarms, wobei das Objekt und die Markierung sich in dem Satz der realen Momentaufnahmen (271) befindet.

8. Verfahren nach Anspruch 7, des Weiteren umfassend:

Bereitstellen eines virtuellen Förderbands, wobei sich die virtuellen Objekte auf dem virtuellen Förderband befinden; und

Bereitstellen eines Förderbands (123), wobei die Objekte (121) sich auf dem Förderband befinden.

9. Verfahren nach Anspruch 7 oder 8, wobei der Satz der virtuellen Momentaufnahmen mittels der virtuellen Kamera so aufgenommen wird, dass sich das virtuelle Objekt in einer Vielzahl unterschiedlicher virtueller Positionen befindet, und der Satz der realen Momentaufnahmen so aufgenommen wird, dass sich das Objekt in einer Vielzahl unterschiedlicher Positionen befindet.

10. Verfahren nach Anspruch 9, wobei die Vielzahl der unterschiedlichen virtuellen Positionen für das virtuelle Objekt innerhalb eines virtuellen Bereichs von 50 Millimetern ist, und die Vielzahl der unterschiedlichen Positionen für das Objekt innerhalb eines Bereichs von 50 Millimetern ist.

11. Verfahren nach Anspruch 1, wobei der virtuelle Roboterarm ein virtuelles Gelenk hat, und die Vielzahl der virtuellen Stellungen eine Vielzahl von unterschiedlichen virtuellen Gelenkwinkeln einschließt, und wobei der Roboterarm ein Gelenk (115) aufweist, und die Vielzahl der Stellungen eine Vielzahl von unterschiedlichen Gelenkwinkeln einschließt.

12. Verfahren nach Anspruch 1, wobei die Ortsdifferenz und/oder die Orientierungsdifferenz zwischen der virtuellen Referenzmomentaufnahme und der realen Referenzmomentaufnahme mittels quadratischen Pixelfehleroder mittleren quadratischen Fehlerberechnungen bestimmt wird/werden.

13. Verfahren nach Anspruch 1, wobei die Ortsdifferenz und/oder die Orientierungsdifferenz zwischen der virtuelle Referenzmomentaufnahme und der realen Referenzmomentaufnahme aus Computer Vision-Algorithmen berechnet wird/werden, die auf den Satz der virtuellen Momentaufnahmen mittels der virtuellen Kamera und den Satz der realen Momentaufnahmen mittels der Kamera angewendet wird/werden.

14. Verfahren nach Anspruch 1, des Weiteren umfassend:

Kalibrieren der Kamera, um mindestens eines von Brennweite, Hauptpunktversatz und Verzeichnungskoeffizient zu bestimmen; und
Konfigurieren der virtuellen Kamera, damit sie dieselbe virtuelle Brennweite, denselben virtuellen Hauptpunktversatz oder denselben virtuellen Verzeichnungskoeffizienten hat.

15. Verfahren nach Anspruch 1, wobei die Vielzahl der virtuellen Stellungen und die Vielzahl der realen Stellungen mittels eines vordefinierten Stellungsskripts bestimmt werden.

## Revendications

1. Procédé pour l'étalonnage d'une cellule robotique (201), comprenant :

la fourniture d'une caméra (lll), d'un bras robotique (l0l) et d'un contrôleur de robot (113) couplé au robot et à la caméra, le contrôleur de robot comportant un processeur qui exécute un programme informatique qui génère un environnement virtuel avec une caméra virtuelle, et un bras robotique virtuel ;
la création, par le contrôleur de robot, d'un ensemble d'instantanés virtuels par la caméra virtuelle du bras robotique virtuel dans l'environnement virtuel selon une pluralité de poses virtuelles ;
la prise d'un ensemble d'instantanés réels par la caméra du bras robotique dans un environnement réel selon une pluralité de poses réelles qui correspondent aux poses de la pluralité de poses virtuelles ;
la comparaison, par le contrôleur de robot, de l'ensemble d'instantanés virtuels avec l'ensemble d'instantanés réels pour trouver la paire en correspondance la plus proche constituée par un instantané virtuel et un instantané réel au moyen d'un algorithme de comparaison d'images par intelligence artificielle ou en déterminant des différences dans des poses de marqueurs réels (273, 277) et de marqueurs virtuels (253, 257) détectés dans l'ensemble d'instantanés réels et l'ensemble d'instantanés virtuels ;
la détermination, par le contrôleur de robot, d'un instantané virtuel de référence et d'un instantané réel de référence à partir de la paire en correspondance la plus proche constituée par un instantané virtuel et un instantané réel ;
la détermination d'une différence de localisation et/ou d'une différence d'orientation entre l'instantané virtuel de référence et l'instantané réel de référence ;
le réglage d'un étalonnage de la cellule robotique virtuelle par le contrôleur de robot sur la base de la différence de localisation et/ou de la différence d'orientation entre l'instantané virtuel de référence et l'instantané réel de référence ;
l'actionnement du bras robotique virtuel par le contrôleur de robot après le réglage de l'étalonnage de la cellule robotique virtuelle ; et
la détermination, par le contrôleur de robot, du fait que l'étalonnage de la cellule robotique virtuelle est à l'intérieur d'une précision requise prédéterminée et le réglage de l'étalonnage de la cellule robotique virtuelle.

2. Procédé selon la revendication 1, dans lequel les instantanés de l'ensemble d'instantanés virtuels issus de la caméra virtuelle sont pris selon une pluralité d'angles de caméra virtuelle différents et les instantanés de l'ensemble d'instantanés réels issus de la caméra sont pris selon une pluralité d'angles de caméra différents.

3. Procédé selon la revendication 2, dans lequel les angles de la pluralité d'angles de caméra virtuelle différents sont à l'intérieur d'une plage d'angles de caméra virtuelle de 20 degrés et les angles de la pluralité d'angles de caméra différents sont à l'intérieur d'une plage d'angles de caméra de 20 degrés.

4. Procédé selon les revendications 1 ou 2, comprenant en outre :

la fourniture d'un marqueur virtuel (253, 257) sur le robot virtuel ; et
la fourniture d'un marqueur réel (273, 277) sur le robot ;
dans lequel le marqueur virtuel et le marqueur réel sont des codes à barres bidimensionnels et le premier instantané virtuel (251) inclut le marqueur virtuel et le premier instantané réel (271) inclut le marqueur réel.

5. Procédé selon la revendication 4, dans lequel le contrôleur de robot détermine une localisation virtuelle et une orientation virtuelle du robot virtuel sur la base du premier instantané virtuel qui inclut le marqueur virtuel et le contrôleur de robot détermine une localisation réelle et une orientation réelle du robot sur la base du premier instantané réel qui inclut le marqueur réel.

6. Procédé selon la revendication l, comprenant en outre

la fourniture d'un objet virtuel à l'intérieur d'une plage de fonctionnement du bras robotique virtuel dans l'environnement virtuel où l'objet virtuel se trouve dans l'ensemble d'instantanés virtuels ; et
la fourniture d'un objet à l'intérieur d'une plage de fonctionnement du bras robotique où l'objet se trouve dans l'ensemble d'instantanés réels.

7. Procédé selon la revendication 1, comprenant en outre

la fourniture d'un objet virtuel (255) comportant un marqueur virtuel (253, 257) à l'intérieur d'une plage de fonctionnement du bras robotique virtuel dans l'environnement virtuel où l'objet virtuel et le marqueur virtuel se trouvent dans l'ensemble d'instantanés virtuels (251) ; et
la fourniture d'un objet (275) comportant un marqueur (276, 277) à l'intérieur d'une plage de fonctionnement du bras robotique où l'objet et le marqueur se trouvent dans l'ensemble d'instantanés réels (271) .

8. Procédé selon la revendication 7, comprenant en outre

la fourniture d'une courroie de convoyeur virtuelle, où les objets virtuels sont sur la courroie de convoyeur virtuelle ; et
la fourniture d'une courroie de convoyeur (l23), où les objets (l2l) sont sur la courroie de convoyeur.

9. Procédé selon les revendications 7 ou 8, dans lequel les instantanés de l'ensemble d'instantanés virtuels issus de la caméra virtuelle sont pris avec l'objet virtuel dans une pluralité de positions virtuelles différentes et les instantanés de l'ensemble d'instantanés réels sont pris avec l'objet dans une pluralité de positions différentes.

10. Procédé selon la revendication 9, dans lequel les positions de la pluralité de positions virtuelles différentes pour l'objet virtuel sont à l'intérieur d'une plage virtuelle de 50 millimètres et les positions de la pluralité de positions différentes pour l'objet sont à l'intérieur d'une plage de 50 millimètres.

11. Procédé selon la revendication l, dans lequel le bras robotique virtuel comporte une articulation virtuelle et la pluralité de poses virtuelles inclut une pluralité d'angles d'articulation virtuelle différents et dans lequel le bras robotique comporte une articulation (1l5) et la pluralité de poses inclut une pluralité d'angles d'articulation différents.

12. Procédé selon la revendication l, dans lequel la différence de localisation et/ou la différence d'orientation entre l'instantané virtuel de référence et l'instantané réel de référence est/sont déterminée(s) par des calculs d'erreurs de pixels carrés ou d'erreurs quadratiques moyennes.

13. Procédé selon la revendication l, dans lequel la différence de localisation et/ou la différence d'orientation entre l'instantané virtuel de référence et l'instantané réel de référence est/sont calculée(s) à partir d'algorithmes de vision par ordinateur appliqués à l'ensemble d'instantanés virtuels issus de la caméra virtuelle et à l'ensemble d'instantanés réels issus de la caméra.

14. Procédé selon la revendication 1, comprenant en outre

l'étalonnage de la caméra pour déterminer au moins un paramètre parmi : la distance focale, le décalage de point principal et le coefficient de distorsion ; et
la configuration de la caméra virtuelle de telle sorte qu'elle présente la même distance focale virtuelle, le même décalage de point principal virtuel ou le même coefficient de distorsion virtuelle.

15. Procédé selon la revendication I, dans lequel la pluralité de poses virtuelles et la pluralité de poses réelles sont déterminées par un scénario prédéfini de poses.

Fig. 1

Fig. 2

Fig. 3

G1 X0 Y0 F2400;   move to the X=0 Y=0 position on the bed at a speed of 2400 mm/min
G1 Z10 F1200;   move the Z-axis to Z=10mm at a slower speed of 1200 mm/min
G1 X30 E10 F1800; push 10mm of filament into the nozzle while moving to the X=30 position at
                 the same time

Fig. 4

```
{
    "id" : "# #",
    "type" : "detail",
    "class" : "execution_data",
    "value" : {
        "object_id" : "plank_0",
        "type" : "long_plank",
        "pose" : {
            "p" : { "x" : 0,  "y" : 0,  "z" : 0 },
            "q" : { "w" : 0,  "x" : 0,  "y" : 0,  "z" : 0 }
        },
        "timestamp" :  "some_timestamp",
        "is_valid" : "true",
        "model" : "ref_id",
        "name" : "some_name",
        "attached" : "gripper_id",
        "weight" : 2.0  // wight in kg.
    }
}
```

Fig. 5

Fig. 6

Fig. 7

Fig. 8

Fig. 9

```
{
    "id" :  <camera ID>,
    "resolution" : {
        "width" :  <image width px>,
        "height" :  <image height px>,
        "format" :  <"png" | "jpeg" | "bmp" | "exr" | "raw">
    },
    "intrinsics" : {
        "fx" :  <fx>,
        "fy" :  <fy>,
        "cx" :  <cx>,
        "cy" :  <cy>,
        "distortion" :  [ <k1>, <k2>, <p1>, <p2>, <k3>  ]
    },
    "pose" : {
        "p" : { "x" :  <x>, "y" : <y>, "z" : <z> },
        "q" : { "w" : <w>, "x" : <x>, "y" : <y> }, "z" : <z>  },
    }
}
```

Fig. 10

```
{
  "world_markers" : [
    {
       "id" :  "<marker ID>",
          "static" :  <true | false>,
          "timestamp" :  <time since epoch>,
        "pose" : {
          "p" : { "x" : <x>,  "y" : <y>,  "z" : <z>  },
          "q" : { "w" : <w>,  "x" : <x>,  "y" : <y>,  "z" : <z>  }
        }
    },
   . . .
  ],
  "timestamp_scene" :  <time since epoch>
}
```

# Fig. 11

```
|{
  "camera" : {
      "resolution" : {
         "width" : <image width px>,
         "height" : <image height px>
         "format" : <"png" | "jpeg" | "bmp" | "exr" | "raw">
      },
      "intrinsics" : {
         "fx" : <fx>,
         "fy" : <fy>,
         "cx" : <cx>,
         "cy" : <cy>,
         "distortion" : [ <d1>, <d2>, <d3>, <d4>, <d5>  ]
      },
      "pose" : {
         "p" : { "x" : <x>, "y" : <y>, "z" : <z>  },
         "q" : { "w" : <w>, "x" : <x>, "y" : <y>, "z" : <z>  }
      }
  },
  "markers" :  [
      {
         "id" : "<marker ID>",
          "static" : <true | false>,
          "timestamp" : <time since epoch>,
         "pose" : {
           "p" : { "x" : <x>, "y" : <y>, "z" : <z>  },
           "q" : { "w" : <w>, "x" : <x>, "y" : <y>, "z" : <z>  }
         }
      },
      . . .
  ],
  "parts" :  [
      {
         "id" : "<unique part ID>",
         "type" :  <part type>,
         "markers" :
         [
             {
                "id" : "<marker ID>",
                 "static" : <true | false>,
                 "timestamp" : <time since epoch>,
                "relative pose" : {
                  "p" : { "x" : <x>, "y" : <y>, "z" : <z>  },
                  "q" : { "w" : <w>, "x" : <x>, "y" : <y>, "z" : <z>  }
                }
             },
             . . .
         ],
         "pose" : {
           "p" : { "x" : <x>, "y" : <y>, "z" : <z>  },
           "q" : { "w" : <w>, "x" : <x>, "y" : <y>, "z" : <z>  }
         }
      },
      . . .
  ],
  "timestamo_scene" :  <time since epoch>
}
```

# Fig. 12

```
{
    "robot_state" : {
        "joints" :  [<joint_1>, <joint_2>, ..., <joint_6],
        "timestamp" : <time>
    },
    "status" : <status>
}
```

# Fig. 13

```
{
    "status" : <"open" | "close">.
}
```

# Fig. 14

Fig. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019028075 A1

**Non-patent literature cited in the description**

- **TIAN.** *Quick 3D Modeling of Machining Environment by Means of On-machine Stereo Vision with Digital Decomposition*